# EUROPEAN PATENT APPLICATION

(11) **EP 1 477 716 A1**
(43) Date of publication of application: **17.11.2004**
(21) Application number: 04002922.5
(22) Date of filing: 10.02.2004
(51) Int. Cl.: F16L 7/00, F16L 57/00

(54) **Spacer for fluid conveying pipes**

(30) Priority: 16.05.2003 IT MI20030234 U
(71) Applicant: Stampa Tecnica Articoli Materiali Plastici- S.T.A.M.P. S.P.A., 20060 Pozzuolo Martesana, Milano (IT)
(72) Inventor: Guerini, Carlo, 20100 Milano (IT)
(74) Representative: Petruzziello, Aldo

(57) **Abstract**

A spacer (1) for conduits or pipes (4; 104; 204) for conveying fluids is described, comprising: a base plate (2) which extends along a plane and has a sufficiently small thickness to allow bending thereof to follow the radius of curvature of the pipe (4, 104, 204) on which it is applied, a plurality of spacer tongues (3) which protrude from the base plate (2) in a direction substantially at right angles to the plane of the base plate, and fixing means (5) which can be applied to the base plate to fix it to the pipe.

## Description

The present invention refers to the field of spacer collars for fluid conveying pipes, particularly pipes for gas and oil pipelines and the like, with a limited diameter, preferably not exceeding 80 mm.

Such fluid conveying pipes, which are generally underground, must be surrounded by a further outer protective pipe, destined to stand up to mechanical stresses. To support the outer pipe, a series of spacer collars, normally of plastic material and spaced apart from one another axially, are disposed around the inner pipe.

The state of the art comprises various types of spacer collars.

A first type of spacer collar has a curved body on which outwardly protruding spacer teeth are formed. Said collar has as its closure a system with a toothed slider adjustable by pulling it parallel to the circumference of the pipe. Locking of the collar on the pipe is determined by the pitch of the tooth.

Said collar is made by injection moulding of plastic material. It therefore presents drawbacks due to the difficulty in making the mould for moulding of the curved body.

Furthermore, because of these difficulties in moulding, the spacer teeth must be disposed at a certain distance from each other. Consequently, a collar is obtained with a limited number of spacer teeth, when the diameter of the pipe to be covered is small.

Another type of spacer collar of the prior art provides for a plurality of spacer elements or modules that can be assembled together. Each module consists of a curved body from which a spacer projection protrudes radially. The module is provided at one end with tongues with inclined teeth and at the opposite end with special housings. In this manner the tongues of one module can engage in the housings of another module.

Said spacer proves somewhat costly, laborious to install and difficult to adapt to small diameter pipes. Therefore, a plurality of elements - and therefore a plurality of moulding stages - are necessary to obtain a spacer collar.

Object of the present invention is to overcome the above described drawbacks of the collars of the prior art.

In particular, object of the invention is to make a spacer collar for pipes that is also and above all suitable for small diameter pipes, that is strong and reliable and that can be produced at a limited cost.

Another object of the invention is to make a spacer collar for pipes which, for the same diameter of the pipe to be covered, has a number of spacer teeth larger than that of the spacer collars of the prior art.

These objects are achieved with a spacer collar as disclosed in appended independent claim 1.

Advantageous embodiments of the invention are apparent from the dependent claims.

The spacer for fluid conveying pipes according to the invention comprises:
- a base plate, which extends along a plane and has a sufficiently small thickness to allow bending thereof to follow the radius of curvature of the pipe on which it is applied;
- a plurality of spacer tongues that protrude from the base plate in a direction substantially at right angles to the plane of the base plate, and
- fixing means that can be applied to the base plate to fix it to the pipe.

Said spacer can be made by injection moulding of plastic material. The design of the mould and the relative moulding process are simplified thanks to the fact that the base plate and the tongues extend along flat surfaces at right angles to each other. This leads to a considerable reduction in production costs.

Furthermore, such a spacer is extremely versatile and can be applied to pipes of different diameters according to the length of the base plate.

Further characteristics of the invention will be made clearer by the detailed description that follows, referring to a purely exemplary and therefore non limiting embodiment thereof, illustrated in the appended drawings, in which:
- Figure 1 is a top plan view of a spacer according to the invention, in which the spacer is disposed in the spread out position;
- Figure 2 is a side view taken in the direction of the arrow A of Figure 1;
- Figure 3 is a front view taken in the direction of the arrow B of Figure 1;
- Figure 4 is a front view of the spacer of Figure 1 applied to a pipe or conduit, in which the conduit is illustrated in cross section;
- Figure 4a is a view like Figure 4, in which a spacer according to the invention is applied to a conduit with a smaller diameter;
- Figure 4b is a view like Figure 4, in which a spacer according to the invention is applied to a conduit with a large diameter;
- Figure 5 is a view like Figure 4, in which the spacer is fixed to the conduit by means of clips;
- Figure 6 is a top plan view of Figure 5.

The spacer according to the invention, indicated as a whole with reference numeral 1, is described with the aid of the figures.

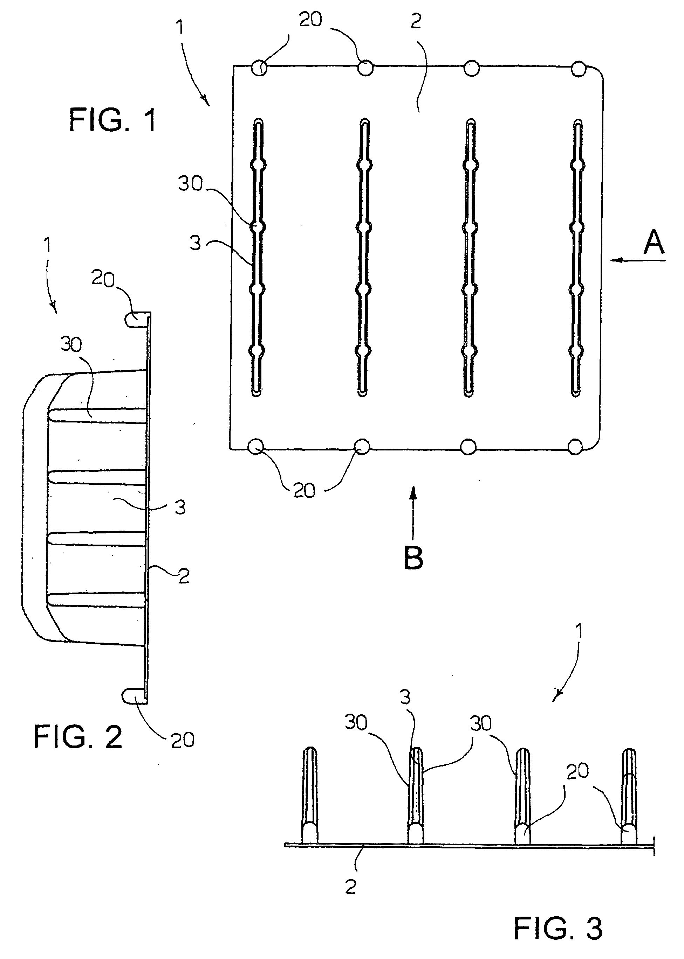

With reference in particular to Figures 1-3, the spacer 1 comprises a base body 2 in the form of a rectangular plate of plastic material. The thickness of the base plate 2 is sufficiently thin to allow bending of the plate 2 and a perfect adherence around the conduit pipe.

The length of the plate 2 is selected according to the outside circumference of the conduit on which the spacer 1 must be mounted.

A plurality of tongues 3 which protrude at right angles with respect to the plate 2 are provided on the upper surface of said plate 2.

The tongues 3 are disposed transversally on the plate 2 and occupy a large part of the width of the plate 2. The tongues 3 are parallel and equidistant from each other. The height of the tongues 3 can be variable according to the difference between the inside diameter and the outside diameter of the pair of conduits on which the spacer 1 must be applied.

The tongues 3 have a plurality of reinforcing ribs 30 which extend in a substantially vertical direction in both sides of each tongue 3. The ribs 30 are parallel and equidistant from each other. The ribs 30 give a greater stiffness to the tongues 3.

A plurality of pins 20 which protrude outward at right angles with respect to the plane of the plate 2 are provided at the front and rear ends of the plate 2. Preferably, the pins 20 are disposed in register with the respective tongues 3. A certain space is left between the end of each tongue 3 and the respective pin 20.

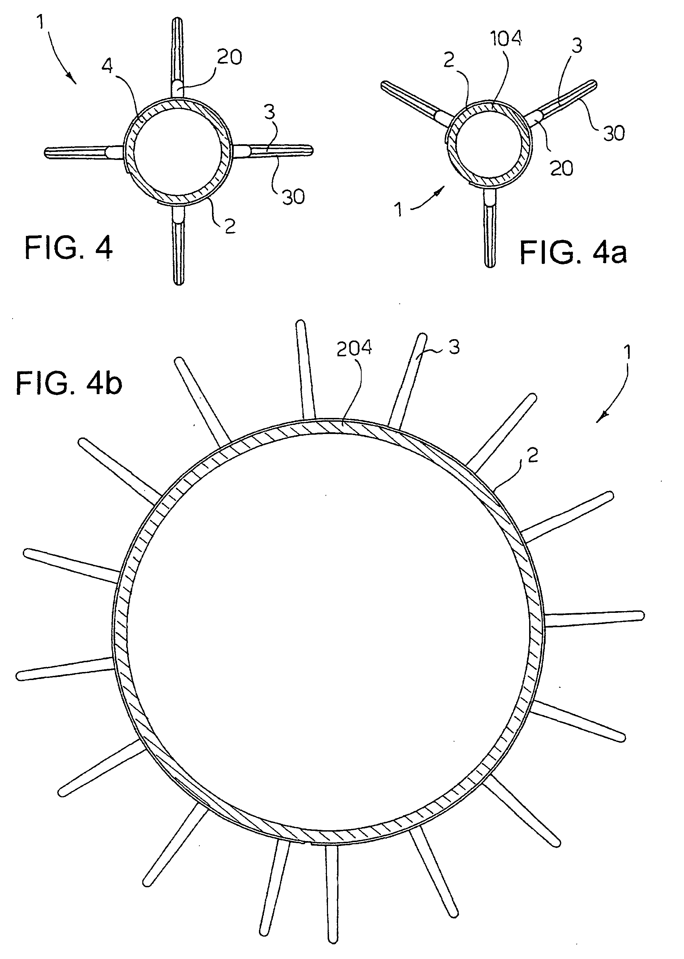

As shown in Figure 4, the spacer 1 is fitted on a conduit 4, in such a manner that the plate 2 of the spacer bends following the outer circumference of the conduit 4 and thus the tongues 3 protrude radially from the conduit 4 and are disposed in a longitudinal direction with respect to the axis of the conduit 4.

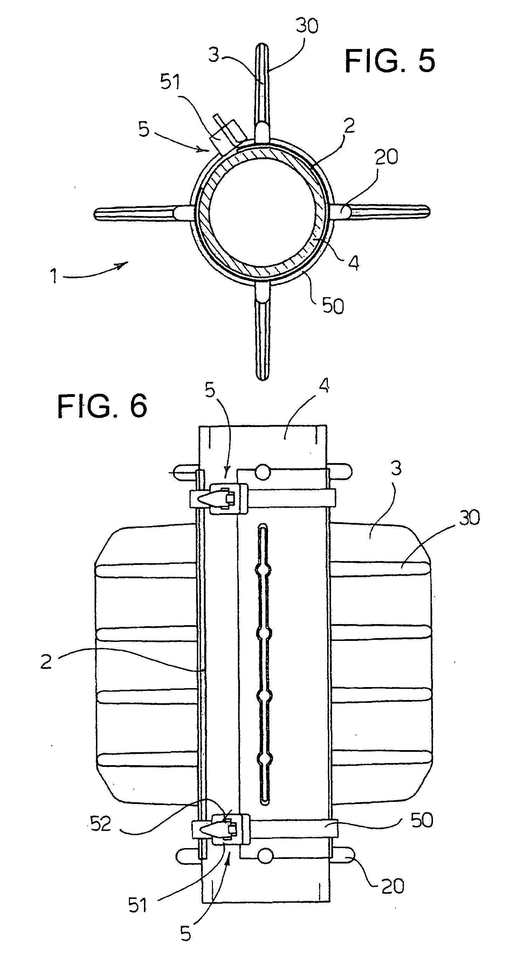

As shown in Figures 5 and 6, to fix and to hold the spacer 1 in position on the conduit 4 two clips 5 of the type commonly available commercially are used.

The clip 5 comprises a strip of plastic 50 having a knurled surface consisting of a plurality of transverse teeth. At one end of the strip 50 a block 51 with a through slot 52 is provided, within which there is disposed a pawl.

The clip 5 is disposed circumferentially on the plate 2 of the spacer 1 in the space between the ends of the tongues 3 and the pins 20. Then, the free end of the strip 50 is inserted into the slot 52 of the terminal block 51 and pulled so as to tighten the clip 5 to cause the plate 2 of the spacer 1 to grip the outer surface of the conduit 4.

The pawl provided in the slot 52 of the block of the clip abuts against the teeth of the strip 50 of the clip preventing loosening of the clip 5.

It should be noted that the clip 5 is held in position at the front and rear ends of the spacer 1 since it is situated between two opposing abutment surfaces defined respectively by the edges of the tongues 3 and by the pins 20. Furthermore, the pins 20 prevent the clip 5 from coming out of the base plate 2 of the spacer.

Instead of or in combination with the clip 5 a layer of glue or a double adhesive film can be provided on the surface of the plate 2.

Once the spacers 1 have been fixed on the inner pipe 4 at suitable distances from each other, an outer pipe (not shown in the figures), which is kept at a distance from the inner pipe 4 thanks to the presence of the spacers 1, can be mounted coaxially. In this manner, by providing for an adequate number of spacer tongues 3, a better load distribution on said tongues 3 is obtained.

Furthermore, thanks to the large number and to the small thickness of the tongues 3, a better load distribution on said tongues 3 is obtained with respect to spacers of the prior art that have few projections of large thickness.

The spacer 1 can be obtained by injection moulding of plastic material starting from a plate 2, of large length, provided with many tongues 3. For example, the length of the plate 2 can correspond to the circumference of the pipe of greatest diameter on which the spacer must be applied. It should be noted that moulding of such a plate proves extremely simple precisely because the plate 2 is disposed along a horizontal plane and the tongues 3 are disposed along a vertical plane.

Subsequently, according to the diameter of the pipe on which the spacer is to be applied, the plate 2 is cut so as to obtain a spacer of the desired length, which can also be applied to pipes with a smaller diameter.

For example, the tongues 3 can be disposed spaced apart from each other with a pitch of about 21 mm.

By way of example, in figures 1 - 4 a spacer 1 has been illustrated, suitable to be applied to a conduit 4 having an outside diameter of 20 mm (DN 20). In this case the spacer 1 is obtained by cutting the base plate 2 so as to provide four tongues 3 which, when the spacer is applied to the pipe 4, are disposed radially and spaced apart from each other by an angle of 90°.

In figure 4a a conduit 104 with a smaller diameter, for example a diameter of 15 mm (DN 15), is illustrated. In this case the plate 2 is cut so as to obtain a spacer 1 provided with three tongues 3. When the spacer 1 is applied to the conduit 104, the tongues 3 are disposed radially, spaced apart from each other by an angle of 120°.

In Figure 4b a conduit 204 with a larger diameter, for example a diameter of 80 mm (DN 80), is illustrated. In this case the plate 2 is cut so as to obtain a spacer 1 provided with sixteen tongues 3. When the spacer 1 is applied to the conduit 204, the tongues 3 are disposed radially, spaced apart from each other by an angle of about 22.5°.

If it were wished to use the spacer according to the invention for pipes with a larger diameter, the thicknesses of both the base plate 2 and the tongues 3 would have to be increased. In this case, the larger radius of curvature makes it possible to have a greater thickness for the base plate.

Numerous changes and modifications of detail within the reach of a person skilled in the art can be made to the present embodiment of the invention without departing from the scope of the invention set forth by the appended claims.

## Claims

1. A spacer (1) for pipes (4, 104, 204) for conveying fluids, comprising:
- a base plate (2), which extends along a plane and has a sufficiently small thickness to allow bending thereof to follow the radius of curvature of the pipe (4, 104, 204) on which it is applied,
- a plurality of spacer tongues (3) that protrude from said base plate (2) in a direction substantially at right angles to the base plate, and
- fixing means (5) that can be applied to said base plate to fix it to said pipe.

2. A spacer according to claim 1, **characterised in that** the base plate (2) and the spacer tongues (3) are made in a single piece by injection moulding of plastic material.

3. A spacer according to claim 1 or 2, **characterised in that** the thickness of said spacer tongues (3) is the same as or greater than the thickness of the base plate (2).

4. A spacer according to any one of the preceding claims, **characterised in that** said spacer tongues (3) have a plurality of reinforcing ribs (30).

5. A spacer according to claim 4, **characterised in that** said reinforcing ribs (30) are disposed along a direction substantially at right angles to the plane of said base plate (2).

6. A spacer according to any one of the preceding claims, **characterised in that** said spacer tongues (3) are disposed equidistant to each other or with a variable pitch.

7. A spacer according to claim 6, **characterised in that** said spacer tongues (3) are disposed with a pitch of about 21 mm.

8. A spacer according to any one of the preceding claims, **characterised in that** said fixing means comprise at least one clip (5) able to surround said base plate (2) to clip it on said pipe (4; 104; 204).

9. A spacer according to any one of the preceding claims, **characterised in that** said fixing means comprise a layer of glue disposed on the base surface of said plate (2).

10. A spacer according to claim 8, **characterised in that** said fixing means comprise a pair of clips (5) disposed at the front and rear ends of said base plate (2).

11. A spacer according to claim 9, **characterised in that** in the front and rear edge of said base plate (2) there are provided pins (20) protruding outward to form an abutment surface for said clips (5), preventing them from coming out.

12. A spacer according to any one of the preceding claims, **characterised in that** it is made in a length corresponding to the maximum pipe diameter on which it can be applied and it is cut to the length corresponding to pipes with a smaller diameter.
